# EUROPÄISCHE PATENTSCHRIFT

(11) **EP 0 807 292 B1**
(45) Veröffentlichungstag und Bekanntmachung des Hinweises auf die Patenterteilung: **05.04.2000**
(21) Anmeldenummer: 96900496.9
(22) Anmeldetag: 23.01.1996
(51) Int. Cl.: G06F 17/60

(54) **VERFAHREN UND SYSTEM ZUR HERSTELLUNG UND DEZENTRALEN AUSLIEFERUNG GEDRUCKTER INFORMATION**
PROCESS AND SYSTEM FOR PRODUCING AND DECENTRALLY DISTRIBUTING PRINTED INFORMATION
PROCEDE ET SYSTEME DE PRODUCTION ET DE DISTRIBUTION DECENTRALE D'INFORMATIONS IMPRIMEES

(30) Priorität: 01.02.1995 CH 26995; 28.07.1995 CH 221195
(43) Veröffentlichungstag der Anmeldung: 19.11.1997
(73) Patentinhaber: Ferag AG, 8340 Hinwil (CH)
(72) Erfinder: HONEGGER, Werner, CH-8806 Bäch (CH)
(74) Vertreter: Frei, Alexandra Sarah
(86) Internationale Anmeldenummer: CH9600032
(87) Internationale Veröffentlichungsnummer: WO9624104

(56) Entgegenhaltungen:
- EP-A- 0 539 106
- WO-A-92/09955
- WO-A-93/15466
- CH-A- 658 629
- DE-A- 2 659 042
- INFORMATIQUE '92. INTERNATIONAL CONFERENCE INTERFACE TO REAL AND VIRTUAL WORLDS. PROCEEDINGS AND EXHIBITION CATALOG, MONTPELLIER, FRANCE, 23-27 MARCH 19928, ISBN 2-906899-70-4, 1992, NANTERRE, FRANCE, EC2, FRANCE, Seiten 485-486, XP 000566208 BOCKER H D ET AL 'Is-News: IPSI's experimental multimedia products'
- PATENT ABSTRACTS OF JAPAN vol. 014 no. 051 (E-0881) ,30.Januar 1990 & JP,A,01 278164 (NEC CORP) 8.November 1989
- PATENT ABSTRACTS OF JAPAN vol. 017 no. 677 (P-1659) ,13.Dezember 1993 & JP,A,05 225243 (NIPPON TELEGR & TELEPH CORP) 3.September 1993
- PATENT ABSTRACTS OF JAPAN vol. 018 no. 286 (E-1556) ,31.Mai 1994 & JP,A,06 054101 (KIICHI TAGA) 25.Februar 1994

## Beschreibung

Die Erfindung betrifft ein Verfahren zur Herstellung und dezentralen Auslieferung von Druckprodukten gemäss dem Oberbegriff des ersten Patentanspruchs und eine Anordnung gemäss dem entsprechenden, unabhängigen Patentanspruch zur Durchführung des Verfahrens.

Auf Papier oder auf einen anderen, gleichwertigen bedruckbaren Träger gedruckte Information wird vom Leser in Form von beispielsweise Zeitungen, Zeitschriften, Broschüren, Bücher etc. gelesen. Derartige gedruckte Information ist gekennzeichnet durch einen Inhalt und durch eine Form, wobei unter dem Inhalt das eigentlich Gedruckte, unter Form die Papierqualität, das Format, die Bindeart etc. verstanden werden soll. Der Leser betrachtet in den häufigsten Fällen den Inhalt als primäres Kennzeichen und die Form als sekundäres Kennzeichen. Aus diesem Grunde stört es ihn offenbar nicht, wenn die beiden Kennzeichen miteinander fest gekoppelt sind und er nur das eine mehr oder weniger frei wählen kann. Eine beispielsweise Ausnahme von der Gekoppeltheit von Inhalt und Form bilden Bücher, die mit gleichem Inhalt für den Leser als Paperbacks und in gebundener Form erhältlich sind. In den meisten Fällen ist aber bei gegebenem Inhalt die Form überhaupt nicht durch die Wünsche des Lesers bestimmbar, sondern ist fest vorgegeben durch die Aktualität und Bedeutungsdauer des Inhaltes, durch die Auflage, durch den Preis, den ein Publikum für den Inhalt zu bezahlen bereit ist, und durch die zur Verfügung stehenden Produktionsmittel, mit denen die gedruckte Information hergestellt wird.

Weitere wichtige Kennzeichen gedruckter Information sind auch Ort und Zeit, an denen sie für den Leser zugänglich wird. Dies gilt insbesondere für aktuelle, gedruckte Information, die nur für kurze Zeit von Bedeutung ist, wie dies, unter vielen anderen, Zeitungen und Zeitschriften darstellen. Es ist im Interesse der Produzenten aktueller, gedruckter Information, dem Leser an möglichst beliebigen Orten möglichst aktuelle Information zur Verfügung zu stellen. Dies ist für die Hersteller von gedruckter Information, insbesondere für jene, die Zeitungen und Zeitschriften herstellen, zunehmend von Bedeutung, seit die gedruckte Form von Information immer stärker gegen die leicht abrufbare, direkt angebotene und gelieferte ungedruckte Form von Information wie es Radio, Fernsehen und andere ähnliche Medien sind, in Konkurrenz gekommen ist.

Gemäss dem Stande der Technik ist der Weg der Information über Druckmedien zeitlich und wegmässig (von Ort-zu-Ort) lang und zudem arbeitsintensiv. Es werden zu druckende Informationen in einer Druckvorstufe erfasst (schriftlich festgehalten) und geordnet (auf Seiten, Blättern etc. in bestimmter Reihenfolge dargestellt und angeordnet). Die Arbeiten der Vorstufe werden heute üblicherweise zu einem grossen Teil mit elektronischen Arbeitsmitteln durchgeführt. Die geordnete Information wird dann auf Druckplatten übertragen, welche Druckplatten auf Druckmaschinen eingesetzt werden. Mit Hilfe der Druckmaschinen wird die Information auf Papierbogen oder quasi endlose Papierbahnen gedruckt und dabei meist um sehr hohe Zahlen vervielfacht. Das bedruckte Papier wird anschliessend weiterverarbeitet, das heisst es wird gefaltet, geschnitten, zusammengeführt, geheftet, gebunden etc, zu welcher Weiterverarbeitung gegebenenfalls auch Zwischenlagerungen gehören. Die in der Weiterverarbeitung hergestellten, fertigen Druckprodukte werden, gegebenenfalls nach einer weiteren Zwischenlagerung, zu Versandeinheiten organisiert und durch Transport örtlich verteilt, zwei Schritte, die oft mehrmals nacheinander durchgeführt werden (Hersteller, Grossverteiler, Detaillist, Käufer). Die gedruckte Information endet am Ende des Verfahrens in der Hand eines Lesers, der sich über einen entsprechenden "Auftrag" die gedruckte Information beschafft hat.

Der "Auftrag" des Lesers zur Beschaffung von gedruckter Information geht in den meisten Fällen an einen Detaillisten (Buchhändler, Kiosk) an der Verkaufsfront oder an einen Verlag (Abonnement), wobei Detaillist bzw. Verlag im Besitze der vom Leser gewünschten, gedruckten Information ist dank dem, dass sie vorgängig entsprechende Aufträge an den Grossverteiler bzw. an die Druckerei haben ergehen lassen.

Ein direkter Auftrag des Lesers an die Druckerei würde zwar sehr viel Überproduktion, die durch die Vorzeitigkeit der Aufträge des Nicht-Endkunden bedingt ist, vermeiden, würde aber zu nicht tolerierbaren Verzögerungen oder, wenn solche vermieden werden sollten, zu immensen Kapazitätssteigerungen und damit zu drastisch höheren Preisen für gedruckte Information führen. Wenn der Leser zusätzlich auch noch den Inhalt zu einem viel höheren Grade selbst bestimmen wollte, müsste er seinen Auftrag an die Vorstufe richten, ein Vorgehen, das beim heutigen Verfahren und den heute eingesetzten Produktionsmitteln mindestens für aktuelle Information eigentlich unvorstellbar ist. Solche Wege sind also nicht gangbar.

Die genannten Probleme werden vermieden mit aktuellen Informationen, z.B. Informationen, wie sie üblicherweise in Zeitungen und Zeitschriften enthalten sind, die nicht auf Papier gedruckt, sondern in Form von Datenmengen oder von visualisierten Datenmengen ausgeliefert werden (elektronische Zeitung). Diese Informationen sind für das Lesen auf einem Bildschirm konzipiert. Wenn ein Endverbraucher sie ausdrucken will, muss er seinen Drucker selbst entsprechend ansteuern und muss das bedruckte Papier selbst zu einer Einheit zusammenfassen. Verfahren zur Herstellung von elektronischen Zeitungen sind beispielsweise beschrieben in den Publikationen WO-93/15466, JP-1278164 oder JP-5225243 oder in der Publikation von H.D. Bocker et. al. "Is News: IPSI's experimental multimedia products" in Informatique 92, International Conference, Interface to Real and Virtual Worlds, Poceedings and Exhibition Catalogue, Montpellier France 1992, Seiten 485 bis 486.

EP-A-0 539 106 beschreibt eine Anordnung (und ein entsprechendes Verfahren) zur Durchführung eines Verfahrens zur Herstellung und Auslieferung von, auf einem bedruckbaren Träger gedruckter, Information die folgende Merkmale beinhaltet:
- einen Speicher zur Speicherung von Informationseinheiten;
- einen Rechner zum auftragsgemäßen Erstellen und Übermitteln von Informationseinheiten aus dem Speicher;
- eine Druckvorrichtung ;und
- eine Eingabestelle zum Erstellen einer Auswahl von angebotenen Informationseinheiten; wobei der Rechner mit dem Speicher, der Eingabestelle und der Druckvorrichtung über Datenleitungen verbunden ist.

Aus DE-OS-26 59 042 ist es bekannt, durch mindestens einen Arbeitsplatz, d.h. Bildschirm mit Eingabevorrichtung, Information zu erfassen, zu aktualisieren und elektronisch speicherbare Informationen zu erstellen.

Um Informationen dezentral zur Verfügung zu stellen, ist es aus WO-A-9209955 bekannt, dezentrale Eingabestellen mit einem Systemrechner zu verbinden.

Es ist nun Zweck der Erfindung, derartige Wege auch für Druckprodukte gangbar zu machen. Das heisst mit andere Worten, es ist Aufgabe der Erfindung, ein Verfahren zur Herstellung und dezentralen Auslieferung von Druckprodukten aufzuzeigen, durch das es möglich wird, dem Verbraucher an praktisch jedem gewünschten Ort eine freiere Auswahl, aktuellerer gedruckter Information anzubieten und auszuliefern. Trotzdem soll das Verfahren den Preis der Druckprodukte nicht durch höhere Material- und Energiekosten und/oder durch höhere Investitionen negativ beeinflussen. Es ist ferner die Aufgabe der Erfindung, eine Anordnung von Vorrichtungen, ein System, aufzuzeigen, das das erfindungsgemässe Verfahren ermöglicht.

Diese Aufgabe wird gelöst durch das Verfahren und die Anordnung, wie sie in den Ansprüchen definiert sind.

Das erfindungsgemässe Verfahren besteht im wesentlichen darin, dass die Information vor dem Drucken angeboten und vom Kunden, der möglichst der End-Kunde also der Leser ist, ausgewählt wird, und darin, dass die Information gemäss Auftrag des Kunden zusammengestellt und transportiert wird und erst dann, nämlich am Ort des Kunden gedruckt wird.

Das erfindungsgemässe Verfahren wird möglich, wenn zwei ihm zugrunde liegende Ideen konsequent angewendet werden. Diese beiden Grundideen sind:
- erstens eine konsequente Trennung des "virtuellen Raumes" der Information vom "materiellen Raum" des Papiers (oder generell des materiellen, bedruckbaren Trägers) und
- zweitens eine konsequente Standardisierung der gedruckten Information auf eine Form, die derart konzipiert ist, dass eine Weiterverarbeitung nach dem Drucken nicht notwendig ist.

Die konsequente Trennung zwischen Information (virtueller Raum) und Papier (reeller Raum) führt dazu, dass die beiden "Räume" sich erst am Ort und zur Zeit der Auslieferung der gedruckten Information in Form von Gebrauchseinheiten an den auftraggebenden End-Kunden (Leser) untrennbar überlagern, also erst dann, wenn Inhalt, Ort und Zeit einer solchen Gebrauchseinheit vom auftraggebenden Kunden definiert sind. Der Vorteil der konsequenten Anwendung dieser Idee besteht darin, dass Information im virtuellen Raum bedeutend einfacher und schneller erfasst und geordnet und insbesondere bedeutend einfacher und schneller vervielfältigt und transportiert werden kann, als es im reellen Raum der Fall ist. Ein weiterer Vorteil besteht darin, dass die Lagerhaltung und die Entsorgung von Überproduktion bedeutend problemloser ist als im reellen Raum, weil keine Materie davon betroffen ist.

Gemäss dem noch heute allein gültigen Stand der Technik werden der virtuelle Raum der Information und deren Verarbeitung und der reelle Raum, zu dem neben Papier auch Druckplatten gehören, auf sehr früher Herstellungsstufe, nämlich bereits bei der Herstellung der Druckplatten oder bei digitalem Drucken beim Druckvorgang untrennbar überlagert, wobei Einheiten entstehen, die dann für eine Anzahl von Folgeschritten (Weiterverarbeitung, Transport, Auslieferung), in denen sie zu den fertigen Gebrauchseinheiten werden, unnötig früh materiebelastet sind.

Die konsequente Standardisierung auf eine Form (im eingangs definierten Sinne), die keine Weiterverarbeitung benötigt und die nur gemäss dem gedruckten Inhalt in engem Rahmen veränderbar, durch den Kunden also nicht beeinflussbar ist, wertet den Inhalt als primär wählbares Kennzeichen gedruckter Information auf und ergänzt die oben beschriebene Trennung zwischen virtuellem Raum und reellem Raum.

Zwar vermindert sich durch die konsequente Standardisierung der Form die Angebotspalette betreffend Formen gedruckter Information als Wahlkriterium für den End-Kunden. Für nach dem Stande der Technik hergestellte, gedruckte Informationen ist aber, wie oben bereits erwähnt, die angebotene Form als wählbares Kennzeichen ebenfalls weitestgehend abgewertet, was jedoch wenig auffällt in der Vielfalt der angebotenen Formen (viele Standardisierungen), die trotzdem unabhängig vom Inhalt nicht wählbar sind.

Die Verknüpfung der beiden Grundideen bzw. -voraussetzungen zum erfindungsgemässen Verfahren zum Herstellen und Ausliefern von gedruckter Information ist verglichen mit herkömmlichen derartigen Verfahren bedeutend zielstrebiger organisierbar und dadurch bedeutend weniger Zeit- und Installations-aufwendig, macht bedeutend weniger Lagerhaltung notwendig und ergibt bedeutend weniger materielle Überproduktion. Varianten des erfindungsgemässen Verfahrens ergeben sich im wesentlichen durch mehr oder weniger konsequente Anwendung der beiden Grundideen.

Druckmedien, die nach dem erfindungsgemässen Verfahren hergestellt und ausgeliefert werden, sind viel mehr mit Medien wie Fernsehen und Radio vergleichbar als mit herkömmlichen Druckmedien. Das neue Druckmedium wird aus einer virtuellen Bibliothek elektronisch erfasster und geordneter Informationseinheiten ausgewählt und sowohl in Bezug auf die Zeit als auch auf den Ort dezentralisiert gedruckt. Das Auswählen aus der Bibliothek kann auch interaktiv geschehen. Im Vergleich dazu wird für das Fernsehen Information gesammelt, verarbeitet und auf den Bildschirm gebracht, der Konsument wählt Programmkanäle und daraus einzelne Sendungen, die er konsumiert und/oder für späteren Gebrauch mit Videorecorder festhält. Dasselbe gilt für das Radio, wo das Informationsangebot im Lautsprecher manifestiert, vom Konsument gehört und wahlweise durch Tonaufzeichnung konserviert wird.

Der Vorteil der neuen Druckmedientechnik gegenüber Medien wie Fernsehen und Radio ist die grössere Zeit-Unabhängigkeit, die durch die virtuelle Bibliothek gewährleistet wird. Video- und Tonbandaufzeichnungen können zwar die absolute Zeitgegebenheit der über Fernsehen und Radio verbreiteten Information mildern, aber nur in Bezug auf den Konsum nicht für den zu erteilenden Auftrag (Aufzeichnung). Das neue (man müsste nun eigentlich sagen elektronische) Druckmedium reiht sich damit technisch gleichrangig und vom Konsumenten gesehen auch mit eigenen Vorteilen (keine absolute Zeitabhängigkeit) in die Reihe der moderneren, schnelleren und flexibleren Medien ein, was, verglichen mit dem jetzigen Zustand der Welt der Druckmedien, revolutionär ist.

Das erfindungsgemässe Verfahren und eine Anordnung von Vorrichtungen zur Herstellung und Auslieferung von gedruckter Information werden im Zusammenhang mit den folgenden Figuren detailliert beschrieben. Dabei zeigen:
- **Figur 1**: ein Schema zum Ablauf des erfindungsgemässen Verfahrens zur Herstellung und Auslieferung von gedruckter Information;
- **Figur 2**: die standardisierte Form der nach dem erfindungsgemässen Verfahren hergestellten und ausgelieferten, gedruckten Information;
- **Figur 3**: ein gleiches Schema wie Figur 1 aber zum heute üblichen Vorgehen zur Herstellung und Auslieferung von gedruckter Information;
- **Figur 4**: ein Schema zum Material- und Energieaufwand des erfindungsgemässen Verfahrens;
- **Figur 5**: ein gleiches Schema wie Figur 3 aber zum heute üblichen Vorgehen;
- **Figur 6**: eine bspw. Anordnung von Vorrichtungen zur Herstellung und Auslieferung von gedruckter Information nach dem erfindungsgemässen Verfahren.

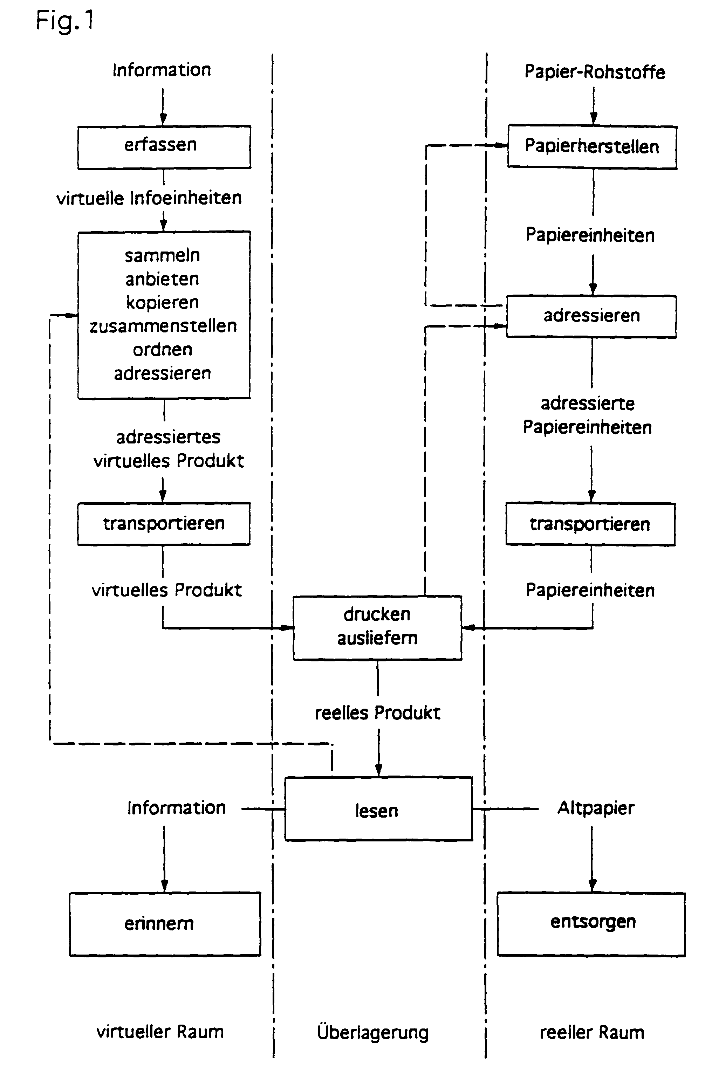

**Figur 1** zeigt ein Schema des erfindungsgemässen Verfahrens, das in drei Raumbereichen durchgeführt wird, nämlich in einem links dargestellten virtuellen Raum, in einem rechts dargestellten reellen Raum und in einem dazwischenliegenden Bereich, in dem sich virtueller Raum und reeller Raum überlagern. Im virtuellen Raum wird "reine Information" bearbeitet, das heisst Information in Form von elektronisch verarbeitbaren Daten, deren Verbindung an materielle Träger in höchstem Grade reversibel ist. Im reellen Raum wird "reine Materie", insbesondere unbedrucktes Papier oder andere bedruckbare Träger, wie beispielsweise Kunststoffolie oder ähnliches, verarbeitet. Im Überlagerungsbereich von virtuellem und reellem Raum wird Information und Materie irreversibel miteinander verbunden (Papier bzw. Träger bedruckt) und in dieser Form verarbeitet.

Die in den verschiedenen Raumbereichen durchgeführten Tätigkeitsgruppen sind im Schema der Figur 1 als Kasten dargestellt, die durch die Tätigkeitsgruppen entstehenden und durch nachfolgende Tätigkeitsgruppen verarbeiteten "Produkte" sind zwischen den Kasten eingeschrieben, wobei die "Produkte" reelle Produkte in Form von unbedrucktem oder bedrucktem Papier oder aber virtuelle Einheiten meist im Sinne von Datenmengen sind.

Produktewege zwischen Kasten der Tätigkeitsgruppen sind in dem Schema durch ausgezogene Pfeile dargestellt, Auftragswege durch gestrichelte Pfeile.

Information wird in einer ersten Tätigkeitsgruppe zu virtuellen Informationseinheiten erfasst. Unter virtuellen Informationseinheiten sind insbesondere digital erfasste und elektronisch gespeicherte Texte und Bilder, sowie aus Texten und Bildern bestehende Artikel, Inserate, Werbeeinheiten etc. zu verstehen. Es sind aber auch Informationseinheiten vorstellbar, die aus Gruppen von Artikeln und Werbebestandteilen bestehen, wie sie beispielsweise von wenig umfangreichen Publikationen oder Publikationsteilen (Zeitungsbund) bekannt sind.

Die virtuellen Informationseinheiten können aber auch bedeutend kleiner sein. Es kann sich dabei beispielsweise um Teile von Versandkatalogen handeln, die Informationen über einzelne Gegenstände oder Gegenstandsgruppen enthalten; ja, es könnte sich sogar um Einzeleinträge beispielsweise für Telephonbücher handeln.

In einer zweiten Tätigkeitsgruppe werden virtuelle Informationseinheiten in einer oder mehreren, elektronischen Bibliotheken gesammelt und angeboten.

Auf Auftrag eines Kunden werden in der Bibliothek vorhandene Informationseinheiten kopiert, zu einem virtuellen Druckprodukt zusammengestellt und geordnet und das Produkt wird gemäss Auftrag adressiert. Das Produkt dieser Tätigkeitsgruppe ist ein virtuelles, adressiertes Druckprodukt, das heisst eine Datenmenge, die die Daten der vom Leser ausgewählten Informationseinheiten in einer geordneten Abfolge enthält, sowie Steuerdaten für deren Transport (Adresse einer Druckvorrichtung) und Steuerdaten für eine Druckvorrichtung (Initialisierung, Papiervorschub, Seitenumbruch etc.).

In einer dritten Tätigkeitsgruppe werden virtuelle, adressierte Produkte transportiert. Der Transport der einzelnen Produkte wird gesteuert durch die adressbezogenen Steuerdaten und erfolgt über Datenleitungen, beispielsweise über das Telephonnetz.

Die Adresse des virtuellen, adressierten Produktes bezeichnet eine Druckvorrichtung, die das Transportziel darstellt. Die Druckvorrichtung verarbeitet einerseits virtuelle Datenmengen und andererseits reelles Papier; ihre Tätigkeit (Drucken) ist also im Überlagerungsbereich des virtuellen und des reellen Raumes angesiedelt.

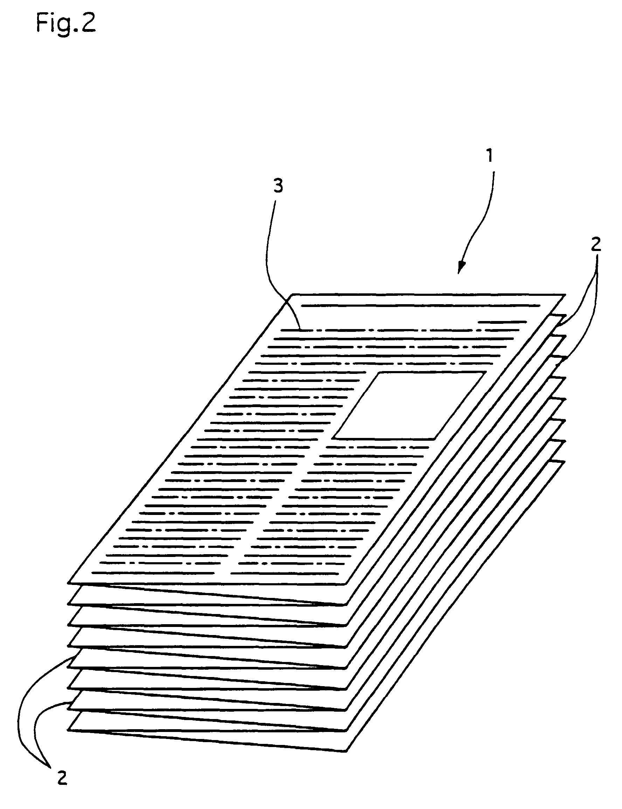

Die Druckvorrichtung wird durch die im virtuellen, adressierten Produkt enthaltenen Steuerdaten zum Ausdrucken der zusammengestellten und geordneten Informationseinheiten angesteuert. Die Form des zu druckenden Produktes ist konsequent standardisiert, das heisst auch die Zuspeisung von Papier oder von einem anderen, bedruckbaren Träger zur Druckvorrichtung. Die standardisierte Form des Druckproduktes (siehe Figur 2) ist möglichst derart, dass nach dem Drucken keine Weiterverarbeitung notwendig ist, das heisst, dass das von der Druckvorrichtung ausgelieferte Produkt gebrauchsfertig ist.

Das reelle Produkt, das vom Drucker ausgeliefert wird, wird vom auftraggebenden Kunden in Empfang genommen (bzw. direkt von der Druckvorrichtung an diesen ausgeliefert) und, wenn dieser Kunde der Leser ist, direkt gelesen, wobei auch diese Tätigkeit als Objekt das mit Information bedruckte, reelle Papier betrifft und deshalb im Überlagerungsbereich angesiedelt ist. Die Tätigkeit des Lesens führt wieder zu einer Aufteilung in virtuelle Information, an die sich der Leser erinnert (letzte Tätigkeit auf der virtuellen Seite), und in das Altpapier, das zu entsorgen ist (letzte Tätigkeit auf der reellen Seite).

Die Tätigkeiten auf der rechten Seite (im reellen Raum) befassen sich mit dem bedruckbaren Träger, beispielsweise mit Papier. Sie umfassen die Papierherstellung (erste Tätigkeitsgruppe), in der Papiereinheiten, beispielsweise aufgerollte, quasi endlose Papierbahnen oder Pakete von Papierbogen, hergestellt werden. Diese Papiereinheiten werden in einer zweiten Tätigkeitsgruppe beispielsweise von einem Papierverteiler gemäss Auftrag adressiert. Die Adressierung erfolgt auf Grund der Bestellung aus dem Bereich der Druckvorrichtung, die das Papier verarbeitet. Der adressierende Verteiler nimmt Einfluss auf die Papierherstellung durch entsprechenden Auftrag.

Die adressierten Papiereinheiten werden gemäss Adresse transportiert (dritte Tätigkeitsgruppe des reellen Raumes) und gelangen so zur Druckvorrichtung.

Lagerhaltungen sind in jedem aus verschiedenen Schritten bestehenden Verfahren da notwendig, wo Aufträge eingehen und/oder von wo Aufträge ausgehen. Soll für den Auftraggeber zeitlich und/oder in Bezug auf Auswahl und Menge eine gewisse Freiheit gewährleistet sein, muss entweder sein Lieferant oder er selbst ein Lager halten. Gemäss dem erfindungsgemässen Verfahren ist also Lagerhaltung notwendig im Bereiche der virtuellen Informationseinheiten (Bibliothek) im virtuellen Raum (Auftragseingang) und im Bereiche der Papiereinheiten (Auftragseingang) im reellen Raum. Ferner ist im Bereiche der Druckvorrichtung ein Lager von Papier notwendig (Auftragsausgang). Wenn im wesentlichen der Leser der auftraggebende Kunde ist (wie dies in der Figur 1 dargestellt ist), kann auf weitere Lagerhaltungen, insbesondere auf Lagerhaltung von bedrucktem Papier völlig verzichtet werden. Bei einer konsequenten Standardisierung der Form der auszuliefernden, gedruckten Information kann die Lagerhaltung im reellen Bereiche (Papier) auf ein Minimum (eine einzige Papierqualität) beschränkt werden.

Die Lagerhaltung im Bereiche der Informationseinheiten ist weitgehend problemlos, nicht nur weil Datenmengen auf wenig Raum und trotzdem problemlos zugänglich gespeichert werden können, sondern auch weil diese Lagerhaltung vor dem Vervielfältigungsschritt stattfindet, das heisst in einer Phase des Verfahrens, in der jede Informationseinheit prinzipiell nur als ein Exemplar gelagert werden muss.

Der Hauptvorteil des erfindungsgemässen Verfahrens besteht darin, dass durch weitestgehendes Entkoppeln des virtuellen Raumes vom reellen Raum, wobei im virtuellen Raum bedeutend zielstrebiger und schneller organisiert und transportiert werden kann, der Auftrag des Endverbrauchers viel früher in das Verfahren einwirken kann. Dadurch wird die Notwendigkeit von Zwischenaufträgen und dadurch eine Lagerhaltungen an verschiedenen Ein/Ausgängen derartiger Zwischenaufträge eliminiert.

Damit aber durch das Erreichen des obigen Vorteils die Auslieferung gemäss Auftrag für den Endverbraucher nicht ungebührlich verteuert wird und nicht an vorgegebene Zeiträume gebunden bleibt, müssen an einzelne Tätigkeiten innerhalb des Verfahrens einschränkende Bedingungen gestellt werden.

Dies betrifft vor allem das Drucken, das heisst die Tätigkeit der Druckvorrichtung. Da das Drucken offensichtlich nach dem Vervielfältigen (Kopieren) und nach dem Transportieren der zu druckenden Information, das heisst in hohem Masse dezentral, ausgeführt wird, müssen insbesondere für ein grosses Auslieferungsnetz eine hohe Zahl von Druckvorrichtungen vorgesehen werden. Wenn der auftraggebende Kunde der Leser ist, heisst das auch, dass jedes zu druckende Produkt mit hoher Wahrscheinlichkeit vom vorhergehend gedruckten Produkt verschieden ist, das heisst mit anderen Worten, dass die Grösse der "Auflagen" nicht nur auf sehr kleine Zahlen sondern sozusagen auf einzelne Produkte sinkt. Durch die genannten beiden Bedingungen wird der Einsatz von Druckmaschinen, wie sie für die Produktion von aktueller Information (Zeitungen, Zeitschriften) heute im Einsatz sind, ausgeschlossen.

Die zu verwendenden Druckvorrichtungen müssen sogenannte digitale Drukker sein. Das sind Druckvorrichtungen, die zum Drucken eines Druckmusters nicht Elemente mit einer stationären, das zu druckende Muster repräsentierende Form (Druckplatten) verwenden, sondern Elemente die durch entsprechende zeitlich aufeinanderfolgende Veränderungen das Druckmuster direkt auf dem Papier erstellen. Derartige Druckvorrichtungen sind in verschiedensten Ausführungen (Laserdrucker, Thermodrucker, Tintenstrahldrucker etc) auf dem Markte erhältlich und es wird heute in einer intensiven Entwicklung an einer Verbesserung der mit derartigen Druckvorrichtungen zu erzielenden Druckqualität und Druckgeschwindigkeit gearbeitet.

Damit die oben genannten Bedingungen betreffend Ausliefergeschwindigkeit erfüllt und die geforderte Dezentralisierung der Drucktätigkeit realisiert werden kann, sind auch auf dem Gebiete der Weiterverarbeitung des bedruckten Papiers neue Wege zu beschreiten. In der Figur 1 fehlt der Verfahrensschritt einer derartigen Weiterverarbeitung offensichtlich. Dies ist nach den Verfahren gemäss dem Stande der Technik nur für Druckprodukte möglich, die aus einem einzigen, nicht gefalteten Druckbogen bestehen.

Für das erfindungsgemässe Verfahren eignet sich als Form für das herzustellende und auszuliefernde, reelle Produkt insbesondere ein beidseitig bedrucktes Leporello, wie es in der **Figur 2** dargestellt ist. Ein Leporello-förmiges Druckprodukt 1 ist eine Papierbahn, die durch quer zur Bahnlänge ausgerichtete Faltkanten 2 in eine Mehrzahl in einer Reihe aneinanderhängender Blätter unterteilt ist, wobei die Faltrichtung der Faltkanten alterniert, sodass die Papierbahn zu einem Faltstapel faltbar ist.

Das einseitige Bedrucken von Faltstapeln ist an sich bekannt aus einer Zeit, in der Digitaldrucker nur zum Drucken noch nicht vervielfältigter Information benützt wurden und dafür noch keine Einzelblatteinzüge erhältlich waren. Das Drucken auf sogenanntes Endlospapier bedeutete dabei die Lösung eines Problems der Papierzufuhr zum Drucker. Die Blätter des zu diesem Zwecke verwendeten Endlospapiers sind denn auch nicht nur durch Faltkanten, sondern durch perforierte Faltkanten miteinander verbunden und werden üblicherweise sofort nach dem Ausdrucken voneinander getrennt, umgeordnet und mit beliebigen Verbindungsmitteln wie beliebige Einzelblätter (in einer gegenüber dem Faltstapel neuen Ordnung) wieder miteinander verbunden. Das Bedrucken von Endlospapier ist denn auch, wohl wegen dieser Zusatzarbeit, mit dem Erscheinen von Einzelblatteinzügen eigentlich verschwunden.

Im erfindungsgemässen Verfahren wird aber mit der Produktion von Leporello-förmigen Produkten nicht ein Zufuhrproblem gelöst, sondern es wird einerseits eine von der Grösse des Inhaltes wenig abhängige Form geschaffen und es können andererseits jegliche Weiterverarbeitungsschritte vermieden werden. Trotzdem stellt das Produkt eine physikalische Einheit dar und ist es bequem lesbar.

Damit das Leporello-förmige Produkt vom Leser mindestens so bequem gelesen werden kann wie andere, gewohnte mehrseitige Druckprodukteformen (Hefte, Bücher, Zeitungen etc.), ist es vorteilhafterweise beidseitig bedruckt und derart, dass die Ausrichtung der gedruckten Schriftzeilen im wesentlichen quer zu den Faltkanten verläuft. Die erste oder Titel-Seite 3 ist die Vorderseite des ersten Blattes der Blattreihe. Die folgenden Seiten sind die Hinterseiten aller Blätter vom ersten bis zum letzten Blatt der Reihe und die darauf folgenden Seiten die Vorderseiten vom letzten Blatt bis zum Blatt, das neben dem die Titelseite tragenden, ersten Blatt liegt. Für ein aus einer Reihe von fünf Blättern bestehendes Leporello ergibt sich somit die folgende Seitennumerierung (bei aufgefalteter Blattreihe von links nach rechts, bzw. letztes Blatt bis erstes Blatt der Reihe): 7/6, 8/5, 9/4, 10/3, 1/2 (je Vorderseite/Rückseite). Allgemein bedeutet dies für ein Druckprodukt mit n Seiten und n/2 Blättern (n ist eine gerade ganze Zahl) auf der einen Seite der Blattreihe die Seitenfolge (n/2+2), (n/2+3),.... n, 1 und auf der anderen Seite die Seitenfolge (n/2+1), n/2, (n/2-1)....3, 2.

Werden die Blätter von der Druckvorrichtung als Faltstapel ausgelegt, sind sie vorteilhafterweise auch in der oben angegebenen Reihenfolge zu drucken, damit das Titelblatt mit der Titelseite 3 oben auf den Faltstapel zu liegen kommt.

Selbstverständlich sind nach dem erfindungsgemässen Verfahren auch Leporello-förmige Druckprodukte herstellbar, in denen die Faltkanten im wesentlichen parallel laufen zu den Schriftzeilen, welche Druckprodukte dann von unten nach oben (oder von oben nach unten) umgeblättert werden statt von links nach rechts.

Eine Zeitung oder Zeitschrift in der Form eines Leporello ist einerseits für das erfindungsgemässe Verfahren günstig, weil es ausser der spezifischen Reihenfolge der Seiten, die aber software-mässig (Ausschiess-Software) erstellt werden kann, keine Produktionsumstellung braucht, ob nun das Leporello viele oder wenige Blätter oder auch nur ein Blatt umfasst. Ferner ist die einzig notwendige Nacharbeit, wenn das Leporello aus einer vorgefalzten, quasi endlosen Papierbahn hergestellt wird, das Abtrennen der bedruckten Blätter von den noch nicht bedruckten Blättern der Papierbahn, eine Nacharbeit, die mit einfachsten Mitteln durchführbar ist und sogar dem Kunden zumutbar ist.

Wird das Leporello-förmige Druckprodukt aus einer nicht vorgefalteten Papierbahn, beispielsweise ab Rolle, hergestellt, dann muss das Papier vor oder nach dem Drucken entsprechend gefaltet werden, wozu eine einfache, zusätzliche Faltvorrichtung, die sozusagen in der Druckvorrichtung integrierbar ist, vorgesehen werden.

Andererseits hat das Leporello gegenüber gängigen Druckprodukteformen den Vorteil, dass es nicht nur an jeder Stelle vollständig geöffnet werden kann sondern dass auch verschiedene Öffnungsmodi bis zum Ausstrecken der ganzen Blattreihe möglich sind, ohne dass dabei die Ordnung der Blätter verloren geht. Das heisst aber auch, dass das Druckbild sich ununterbrochen über zwei oder mehrere Seiten erstrecken kann, ohne dass ein Teil davon im Falz verloren geht. Jedes einzelne Seitenpaar hat also dieselben privilegierten Eigenschaften, die in einem gehefteten Heft die beiden Mittelseiten haben. In einem Heft mit geklebtem Rücken gibt es keine derartig privilegierte Seiten bzw. Doppelseiten.

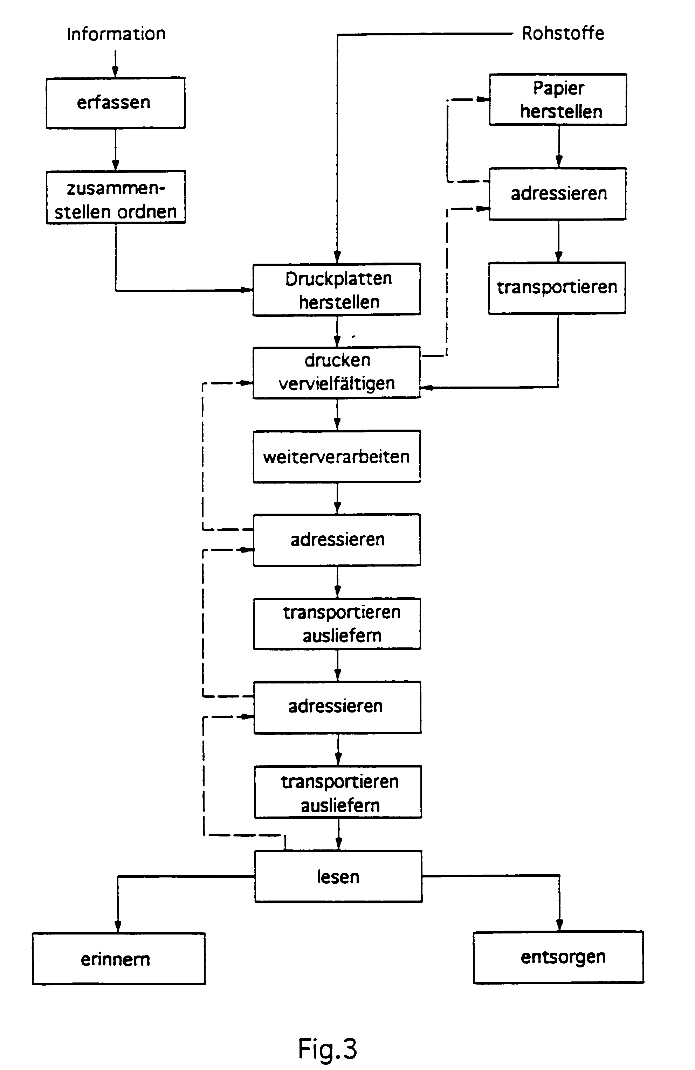

Zur Illustration des Unterschieds zwischen dem erfindungsgemässen Verfahren und entsprechenden Verfahren gemäss dem Stande der Technik zeigt **Figur 3** ein derartiges Verfahren in der gleichen Art wie Figur 1, also aufgeteilt in einen virtuellen Raum (links), einen reellen Raum (rechts) und einen mittleren Überlagerungsbereich der beiden Räume. Wiederum sind Tätigkeitsgruppen als Kasten dargestellt. Die zwischen den Tätigkeitsgruppen zu erwähnenden "Produkte" sind aus Platzgründen weggelassen.

Das Schema der Figur 3 braucht an sich keine Erklärung, da es sich um den Stand der Technik handelt. Es sei aber kurz auf die Unterschiede zwischen den Verfahren gemäss Figur 1 und Figur 3 hingewiesen. Auffallend ist sofort, dass die Verfahrensschritte in der mittleren Zone (Überlagerung von virtuellem und reellem Raum) gemäss dem Stande der Technik bedeutend zahlreicher sind. Das heisst insbesondere, dass in diesem Raum weiterverarbeitet, adressiert und transportiert wird, wobei die beiden letzteren Schritte oft zwei oder sogar mehrere Male durchgeführt werden. Ein Hauptunterschied besteht ferner darin, dass gemäss dem Stande der Technik das Vervielfältigen (Kopieren) im Überlagerungsraum (beim Drucken) gemäss Erfindung aber im virtuellen Raum stattfindet.

Eine direkte Folge der konsequenteren Entkoppelung von virtuellem und reellem Raum, wie dies beim erfindungsgemässen Verfahren der Fall ist, resultiert in der bedeutend einfacheren Auftragsstruktur des erfindungsgemässen Verfahrens, die ebenfalls durch einen Vergleich der Figuren 1 und 3 deutlich wird. Eine ähnlich einfache Auftragsstruktur bei gleichzeitig im wesentlichen freier Inhaltswahl ist gemäss dem bekannten Verfahren (Figur 3) mit den geforderten Lieferzeiten nicht möglich, auch wenn digitale Druckvorrichtungen verwendet werden und auf bestehenden Transportnetzen (Briefpost) transportiert wird.

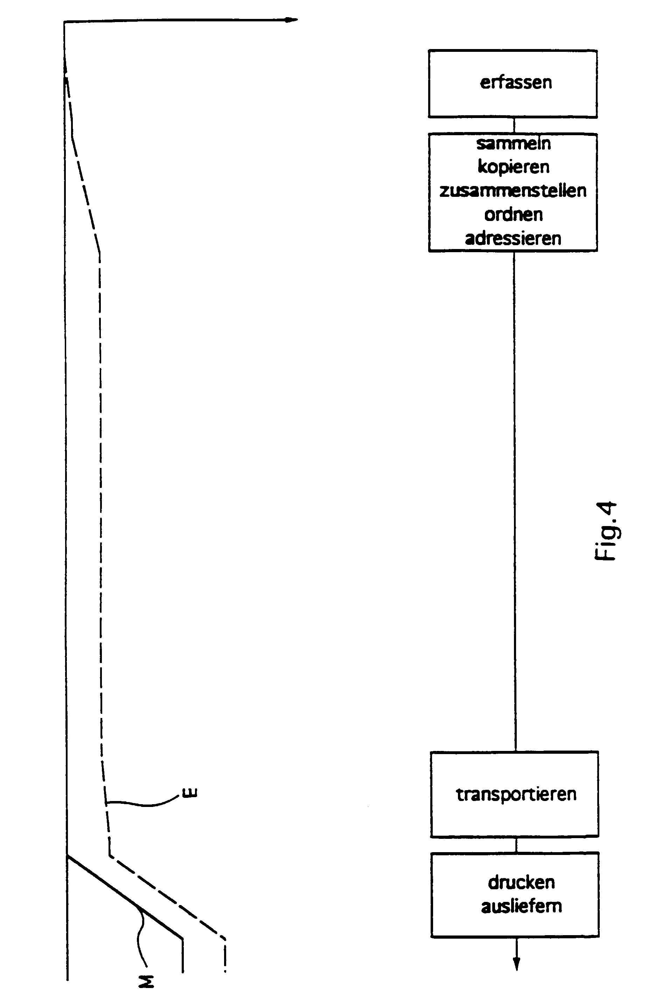

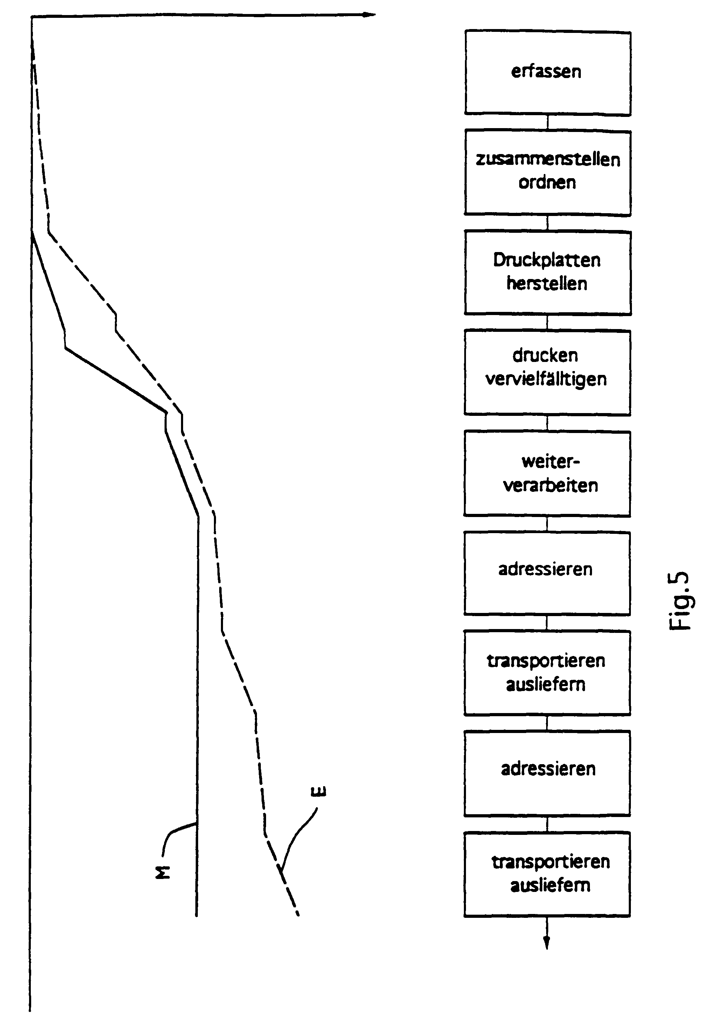

**Figuren 4 und 5** dienen weiter zur Illustration der Unterschiede zwischen dem erfindungsgemässen Verfahren und entsprechenden, heute üblichen Verfahren. Es handelt sich um Diagramme bezüglich erfindungsgemässem Verfahren (Figur 4) und bekannten Verfahren (Figur 5), welche Diagramme den Aufwand an Material M und Energie E (Ordinate) als Funktion des Verfahrensverlaufs (Abszisse) darstellen, wobei der Verfahrensverlauf wiederum mit Kasten für Tätigkeitsgruppen dargestellt ist. Um die Diagramme nicht unnötig zu verkomplizieren, ist die Papierherstellung, die ja für beide Arten von Verfahren in etwa dieselbe ist, nicht in die Diagramme miteinbezogen.

Ein Vergleich der beiden Figuren 4 und 5 zeigt, dass nach dem erfindungsgemässen Verfahren weniger Material (keine Druckplatten, keine Überproduktion) verbraucht wird und dass weniger Energie notwendig ist, insbesondere dadurch dass Papier zielstrebiger transportiert wird (direkt zum Verbraucher).

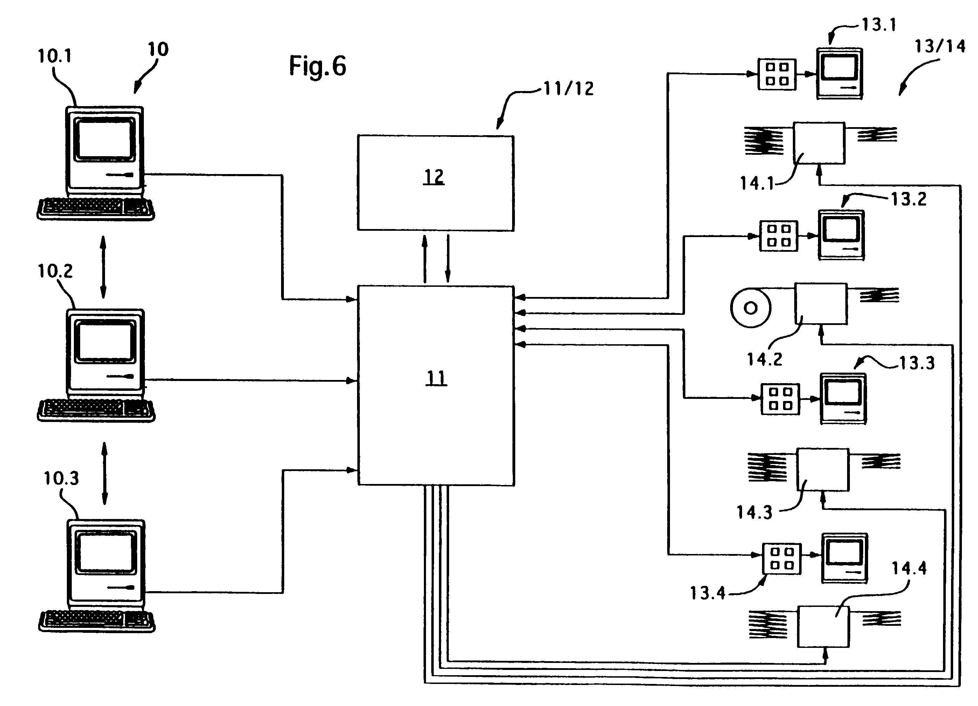

**Figur 6** zeigt eine beispielhafte Anordnung von Vorrichtungen, mit welcher Anordnung das erfindungsgemässe Verfahren durchführbar ist. Die Anordnung besteht im wesentlichen aus drei Ebenen: einer Informationserfassungs-Ebene mit Arbeitsplätzen 10 zum Erfassen von Information, einer Auftragserteilungs- und Auslieferungs-Ebene mit Eingabestellen 13 und Druckvorrichtungen 14, in der Information durch Auftrag angefordert und entsprechend ausgeliefert wird, und einer dazwischenliegenden Auftragsverarbeitungs-Ebene mit einem Systemrechner 11 und einem Speicher 12, in der erfasste Informationseinheiten gespeichert, gemäss Auftrag verarbeitet und deren Auslieferung initiiert wird.

Die Anordnung weist mindestens einen Arbeitsplatz 10 (in der Figur drei: 10.1, 10.2, 10.3) auf, an dem Information erfasst und zu virtuellen Informationseinheiten verarbeitet wird. Es handelt sich dabei im wesentlichen um Arbeitsplätze mit Bildschirm und Tastatur und/oder mit einer anderen Eingabevorrichtung (Scanner etc.), die beispielsweise je einen eigenen Rechner aufweisen oder mit einem Server zu einem Netzwerk verbunden sind. Die Anordnung weist ferner einen Systemrechner 11 auf, welchem Systemrechner 11 ein Speicher 12 zugeordnet ist. Die Arbeitsplätze 10.1, 10.2, 10.3 sind mit dem Systemrechner 11 über Datenleitungen verbunden, beispielsweise über Modem und Leitungen des Telephonnetzes. Die Arbeitsplätze 10.1, 10.2, 10.3 können auch untereinander durch Datenleitungen verbunden sein.

Der Systemrechner 11 empfängt von den Arbeitsplätzen 10.1, 10.2, 10.3 virtuelle Informationseinheiten und speichert sie im Speicher 12 ab, wodurch eine virtuelle Informations-Bibliothek entsteht. Die virtuelle Bibliothek wird vom Systemrechner 11 verwaltet, derart, dass die Informationseinheiten nur über einen Zeitraum, über den sie aktuell sind, in der Bibliothek zugänglich sind. Der Speicher 12 stellt also zu jedem Zeitpunkt eine aktuelle Bibliothek virtueller Informationseinheiten dar.

Die Anordnung weist ferner eine Mehrzahl von dezentral angeordneten Druckvorrichtungen 14 (in der Figur vier: 14.1, 14.2, 14.3, 14.4) auf, die mit dem Systemrechner 11 über Datenleitungen, beispielsweise mit Modem und Telephonleitungen verbunden sind. Die Druckvorrichtungen sind derart ausgerüstet, dass sie vorgefaltetes Papier ab Faltstapel bedrucken (Druckvorrichtungen 14.1, 14.3, 14.4) oder dass sie eine integrierte Faltvorrichtung aufweisen und ungefaltetes Papier beispielsweise ab Rolle bedrucken (Druckvorrichtung 14.2). Im Bereiche jeder Druckvorrichtung 14 ist auch eine Eingabestelle 13.1, 13.2, 13.3, 13.4 vorgesehen, die ebenfalls über eine Datenleitung mit dem Systemrechner 11 verbunden ist und an der Aufträge an den Systemrechner 11 eingegeben werden. Die Eingabestellen 13 können für interaktive Auftragserteilung ausgerüstet sein, derart, dass beispielsweise das Angebot der aktuellen Informationsbibliothek auf Bildschirm eingesehen werden kann und die angebotenen Informationseinheiten (beispielsweise Zeitungsartikel oder Zeitungsteile) frei kombiniert werden können, oder es sind beispielsweise nur Tasten für erhältliche Informationseinheiten (beispielsweise ganze Zeitungen oder Zeitschriften) vorgesehen, mit denen dann eine im Moment der Auftragserteilung absolut aktuelle Zeitung erhältlich ist.

Selbstverständlich sind auch Anordnungen denkbar, in denen mehrere Systemrechner mit Informationsbibliotheken vorgesehen sind, wobei die mögliche Vernetzung fast beliebig ist. Die Arbeitsplätze 10 können untereinander und mit verschiedenen Systemrechnern 11 verbunden sein und die Druckvorrichtungen 14 und Eingabestellen 13 können mit beliebig vielen Systemrechnern 11 verbunden sein. Ferner können auch mehrere Systemrechner 11 untereinander vernetzt sein. Es ist auch vorstellbar, dass Eingabestellen 13 direkt mit Arbeitsplätzen 10 verbunden sind, dass also ein Endkunde über eine derartige Verbindung beispielsweise Inserate aufgeben oder Wünsche und Kritik in das System einbringen kann.

In der obigen Beschreibung des erfindungsgemässen Verfahrens sind meist gedruckte Informationen mit Inhalten, wie sie die heute üblichen Zeitungen und Zeitschriften aufweisen, als Beispiele genannt. Selbstverständlich beschränkt sich das erfindungsgemässe Verfahren nicht auf diese Anwendungen. Neben Druckprodukten mit aktuellem Inhalt, wie sie heute Zeitungen und Zeitschriften aufweisen, ist es durchaus vorstellbar, dass mit dem erfindungsgemässen Verfahren beispielsweise lokale und/oder branchenbezogene Telephonbücher, auf bestimmte Gegenstands- oder Serviceleistungstypen bezogene Versand- oder Verkaufskataloge, Prospekte, Preislisten und weiteres mehr anbietbar und herstellbar sind.

Ferner ist es möglich in das erfindungsgemässe Verfahren die Auftragsverwaltung zu integrieren, beispielsweise derart, dass mit dem Druckprodukt eine entsprechende Rechnung ausgedruckt wird, dass der Auftrag unmittelbar auf einem durch eine an der Eingabestelle eingeschobene Kreditkarte zugänglichen Konto abgebucht wird oder dass eine "Abonnementskarte" eingeschoben wird, die automatisch einen Auftrag auslöst.

Die einzelnen Vorrichtungen (Arbeitsplätze 10, Systemrechner 11, Speicher 12, Druckvorrichtungen 14, Eingabestellen 13, sowie auch über Drähte oder drahtlos funktionierende Übermittlungssysteme zum Transport der Datenmengen), die in der erfindungsgemässen Anordnung vorgesehen sind, sind grundsätzlich alle bekannt. Neu und erfinderisch ist deren Anordnung in einem gesellschaftlichen Raum und deren gegenseitige Verknüpfung, durch die sie zu einem, eine Aufgabe lösenden System zusammengeschlossen sind.

## Patentansprüche

1. Verfahren zur Herstellung und dezentralen Auslieferung von Druckprodukten, die laufend zu aktualisierende Informationen enthalten, wobei diese Informationen mit Hilfe von mindestens einem Arbeitsplatz (10) und mit Hilfe mindestens eines Systemrechners (11) elektronisch erfasst, aktualisiert und in mindestens einem Speicher (12) elektronisch gespeichert und mit Hilfe einer Druckvorrichtung (14) auf einen bedruckbaren Träger gedruckt werden, welche Druckvorrichtung (14) für das beidseitige Bedrucken einer quasi endlosen Bahn des bedruckbaren Trägers und für das Auslegen des bedruckten Trägers in Form eines Faltstapels ausgerüstet ist, wobei
in dem mindestens einen Speicher (12) Informationseinheiten über den Zeitraum ihrer Aktualität gespeichert werden;
an einer Mehrzahl von dezentral angeordneten Eingabestellen, die mit Bedienungsmitteln ausgerüstet sind, die gespeicherten, aktuellen Informationseinheiten angeboten werden;
eine mit Hilfe der Bedienungsmittel an einer spezifischen Eingabestelle erstellte Auswahl von angebotenen Informationseinheiten als Auftrag für die Auslieferung eines die Auswahl von Informationseinheiten enthaltenden Druckproduktes an den mindestens einen Systemrechner (11) übermittelt wird;
in dem mindestens einen Systemrechner (11), initialisiert durch den von der spezifischen Eingabestelle übermittelten Auftrag, Daten für die dem Auftrag entsprechende Auswahl von Informationseinheiten aus dem mindestens einen Speicher (12) kopiert und zu einer Datenmenge verarbeitet werden, in welcher Datenmenge die auftragsgemässe Auswahl von Informationseinheiten als Abfolge druckbarer Seiten sowie Steuerdaten für den Datentransport zu einem der spezifischen Eingabestelle zugeordneten Druckvorrichtung und Steuerdaten für einen entsprechenden Druckprozess enthalten sind;
die in dem mindestens einen Systemrechner (11) erzeugte, auftragsgemässe Datenmenge an eine der spezifischen Eingabestelle zugeordnete Druckvorrichtung (14) übermittelt wird;
die Druckvorrichtung (14) durch die Datenmenge derart angesteuert wird, dass sie die dem Auftrag entsprechende Auswahl von Informationseinheiten als Leporello-förmiges Druckprodukt druckt und als Faltstapel auslegt;
und der Bereich mit den gedruckten Seiten des auftragsgemäss erstellten Druckproduktes von der quasi endlosen Bahn abgetrennt wird.

2. Verfahren nach Anspruch 1, wobei das Leporello-förmige Druckprodukt durch Faltkanten voneinander getrennte Druckseiten 1 bis n aufweist, die auf der einen Seite der Bahn des bedruckbaren Trägers in der Reihenfolge 1, n, n-1.....n/2+2 und auf der anderen Seite der Bahn in der Reihenfolge 2, 3, 4, .....n/2+1 angeordnet sind.

3. Verfahren nach Anspruch 1 oder 2, wobei Aufträge und auftragsgemäss erstellte Datenmengen zwischen den Eingabestellen, den Druckern und dem mindestens einen Systemrechner (11) über das Telephonnetz übermittelt werden.

4. Verfahren nach einem der Ansprüche 1 bis 3, wobei die quasi endlose Bahn des bedruckbaren Trägers ungefaltet und gerollt ist oder in Form eines Faltstapels vorgefaltet ist.

5. Verfahren nach einem der Ansprüche 1 bis 4, wobei der Auftrag in einer interaktiven Verbindung zwischen einer Eingabestelle und dem mindestens einen Systemrechner (11) erstellt und an den Systemrechner (11) übermittelt wird.

6. Verfahren nach Anspruch 5, wobei mit der Auftragserteilung auch eine Auftragsverwaltung initiiert wird.

7. Verfahren nach Anspruch 6, wobei Auftragserteilung und Auftragsverwaltung über eine an der Eingabestelle einzusteckende Karte gesteuert wird.

8. Verfahren nach einem der Ansprüche 1 bis 7, wobei die Informationseinheiten ihrem Inhalt nach einzelnen Artikeln, Teilen von Zeitungen oder Zeitschriften oder ganzen Zeitungen oder Zeitschriften entsprechen.

9. Verfahren nach einem der Ansprüche 1 bis 7, wobei die Informationseinheiten ihrem Inhalt nach Teilen von Versandkatalogen, Prospekten, Preislisten oder Telephonbüchern entsprechen.

10. Anordnung zur Durchführung des Verfahrens nach Anspruch 1, das heisst zur Herstellung und dezentralen Auslieferung von Druckprodukten, die laufend zu aktualisierende Informationen enthalten, wobei für die elektronische Erfassung, Aktualisierung und elektronischen Speicherung dieser Informationen mindestens ein Arbeitsplatz (10), mindestens ein Systemrechner (11) und mindestens ein Speicher (12) und zum Drucken der Information auf einen bedruckbaren Träger eine Mehrzahl von digitalen Druckvorrichtungen (14) vorgesehen sind, welche Druckvorrichtungen (14) für das beidseitige Bedrucken einer quasi endlosen Bahn des bedruckbaren Trägers und für das Auslegen des bedruckten Trägers in Form eines Faltstapels ausgerüstet sind, wobei
zur Speicherung von Informationseinheiten über den Zeitraum ihrer Aktualität der mindestens eine Systemrechner (11) mit dem mindestens einen Speicher (12) verbunden ist;
zum Anbieten der gespeicherten, aktuellen Informationseinheiten und zum Erstellen einer Auswahl von angebotenen Informationseinheiten eine Mehrzahl von dezentral angeordneten Eingabestellen mit Bedienungsmitteln vorgesehen ist;
zur Übermittlung der erstellten Auswahl von angebotenen Informationseinheiten als Auftrag für die Auslieferung eines die Auswahl von Informationseinheiten enthaltenden Druckproduktes die Eingabestellen mit dem mindestens einen Systemrechner (11) verbunden sind;
der mindestens eine Systemrechner (11), initialisiert durch den von der spezifischen Eingabestelle übermittelten Auftrag, Daten für die dem Auftrag entsprechende Auswahl von Informationseinheiten aus dem mindestens einen Speicher (12) kopiert und zu einer Datenmenge verarbeitet, in welcher Datenmenge die auftragsgemässe Auswahl von Informationseinheiten als Abfolge druckbarer Seiten sowie Steuerdaten für den Datentransport zu einem der spezifischen Eingabestelle zugeordneten Druckvorrichtung und Steuerdaten für einen entsprechenden Druckprozess enthalten sind;
zur Übermittlung der in dem mindestens einen Systemrechner (11) auftragsgemäss erstellten Datenmenge der mindestens eine Systemrechner (11) mit einer der Eingabestelle zugeordneten Druckvorrichtung (14) verbunden ist;
die Druckvorrichtung (14) durch die übermittelte Datenmenge ansteuerbar ist für den Druck und das Auslegen als Faltstapel eines Leporello-förmigen Druckproduktes, das die dem Auftrag entsprechende Auswahl von Informationseinheiten enthält; und
wobei die Verbindungen zwischen Systemrechner (11), Speicher (12), Eingabestellen (13) und Druckvorrichtungen (14) direkt oder indirekt sind und durch Datenleitungen oder drahtlose Verbindungssysteme realisiert sind.

11. Anordnung nach Anspruch 10, wobei mindestens die Datenleitungen oder drahtlosen Verbindungssysteme zwischen Systemrechner (11) und Druckvorrichtungen (14) und Eingabestellen (13) Teile eines Telephonnetzes sind.

12. Anordnung nach einem der Ansprüche 10 oder 11, wobei die Druckvorrichtungen (14) zur Verarbeitung einer aufgerollten oder zu einem Faltstapel vorgefalteten Bahn des bedruckbaren Trägers ausgerüstet sind.

13. Anordnung nach einem der Ansprüche 10 bis 12, wobei die Eingabestellen (13) zum interaktiven Verkehr mit dem Systemrechner (11) ausgerüstet sind.

14. Anordnung nach Anspruch 13, wobei die Eingabestellen (13) zum Einlesen einer Karte ausgerüstet sind.

15. Sequenz von Druckprodukten, die dem Bereich der Druckmedien angehören, von Verkaufskatalogen, Versandkatalogen, Prospekten, Preislisten und/oder Telephonbüchern dadurch gekennzeichnet, dass sie nach dem Verfahren gemäss Anspruch 1 hergestellt und dezentral ausgeliefert wird, wobei die Druckprodukte der Sequenz Leporello-förmig sind und dass Inhalt und Volumen jedes Druckprodukts einem spezifischen Auftrag entspricht.

## Claims

1. Method for the production and decentralized delivery of printed products, which continuously receive information to be updated, said information being electronically acquired and updated with the aid of at least one operating location (10) and at least one system computer (11) and electronically stored in at least one memory (12), being printed with the aid of a printer (14) on a printable support, said printer (14) being equipped for two-sided printing of a quasi-endless web of the printable support and for the laying out of the printed support in the form of a folding stack, wherein in the at least one memory (12) are stored over the period of their topicality information units, the stored, topical information units are made available at a plurality of decentrally arranged input locations equipped with operating means, a selection of offered information units made with the aid of the operating means at a specific input location is transmitted as an order for the delivery of a printed product containing the selection of information units to the at least one system computer (11), initialized by the order transmitted from the specific input location, in the at least one system computer (11) are copied data for the order-corresponding selection of information units from the at least one memory (12) and then processed to a data quantity, in which are contained the order-based selection of information units as a sequence of printable sides, as well as control data for the data transportation to a printer associated with the specific input location and control data for a corresponding printing process, the order-based data quantity produced in the at least one system computer (11) is transmitted to a printer (14) associated with the specific input location, the printer (14) is so controlled by the data quantity that the selection of information units corresponding to the order is printed as an accordion-folded printing product and laid out as a folding stack and the area with the printed sides of the order-based produced printed product is separated from the quasi-endless web.

2. Method according to claim 1, wherein the accordion-folded printing product has printing sides 1 to n separated from one another by folding edges, placed on one side of the web of printable support in the sequence 1, n, n-1 ... n/2+2 and on the other side of the web in the sequence 2, 3, 4, ... n/2+1.

3. Method according to claim 1 or 2, wherein orders and order-based produced data quantities are transmitted by the telephone network between the input locations, the printers and the at least one system computer (11).

4. Method according to one of the claims 1 to 3, wherein the quasi-endless web of printable support is unfolded and rolled or is prefolded in the form of a folding stack.

5. Method according to one of the claims 1 to 4, wherein the order is produced in an interaction connection between an input location and the at least one system computer (11) and is transmitted to the latter.

6. Method according to claim 5, wherein with the giving of an order is also initiated an order management.

7. Method according to claim 6, wherein the giving and management of an order is controlled by means of a card to be inserted at the input location.

8. Method according to one of the claims 1 to 7, wherein the information units, on the basis of their content, correspond to individual articles, parts of newspapers or magazines or complete newspapers or magazines.

9. Method according to one of the claims 1 to 7, wherein the information units, on the basis of their content, are parts of mail order catalogues, brochures, price lists or telephone directories.

10. Arrangement for performing the method according to claim 1, i.e. for the production and decentralized delivery of printed products which contain information to be continuously updated and for the electronic acquisitbn, updating and electronic storage of said information are provided at least one operating location (10), at least one system computer (11) and at least one memory (12) and for printing information on a printable support a plurality of digital printers (14), said printers being equipped for the two-sided printing of a quasi-continuous web of the printable support and for the laying out of the printed support in the form of a folding stack, in which for the storage of information units over the period of their topicality the at least one system computer (11) is connected to the at least one memory (12), a plurality of input locations with operating means arranged in decentralized manner are provided for offering the stored, topical information units and for producing a selection of the offered information units, for transmitting the selection of offered information units made as an order for the delivery of a printed product containing the selection of information units the input locations are connected to the at least one system computer (11), the at least one system computer (11), initialized by the order transmitted from the specific input location copies data for the order-corresponding selection of information units from the at least one memory (12) and processes same to a data quantity containing the order-based selection of information units as a sequence of printable sides, as well as control data for data transportation to a printer associated with the specific input location and control data for a corresponding printing process, for the transmission of the data quantity produced according to the order in the at least one system computer (11), the latter being connected to a printer (14) associated with the input location, through the transmitted data quantity the printer (14) is controllable for the printing and laying out as a folding stack of an accordion-folded printed product, which contains order-corresponding selection of information units and in which the connections between the system computers (11), memories (12), input locations (13) and printers (14) are direct or indirect and implemented by data lines or wireless connecting systems.

11. Arrangement according to claim 10, wherein at least the data lines or wireless connection systems between system computers (11) and printers (14) and input locations (13) are parts of a telephone network.

12. Arrangement according to one of the claims 10 or 11, wherein the printers (14) are equipped for processing a rolled-up web of the printable support, or such a web prefolded to a folding stack.

13. Arrangement according to one of the claims 10 to 12, wherein the input locations (13) are equipped for interactive traffic with the system computer (11).

14. Arrangement according to claim 13, wherein the input locations (13) are equipped for reading in a card.

15. Sequence of printed products, belonging to the printing media sector, sales catalogues, mail order catalogues, brochures, price lists and/or telephone directories, characterized in that they are produced and delivered in decentralized manner according to the method of claim 1, in which the printed products of the sequence are accordion-folded and the content and volume of each printed product corresponds to a specific order.

## Revendications

1. Procédé de fabrication et de distribution décentralisée de produits imprimés qui comportent des informations à actualiser régulièrement, ces informations étant enregistrées électroniquement et actualisées à l'aide d'au moins une station de travail (10) et d'au moins un ordinateur système (11), étant stockées électroniquement dans au moins une mémoire (12) et imprimées sur un support imprimable à l'aide d'un dispositif d'impression (14) qui est équipé pour l'impression des deux côtés d'une bande quasi- continue du support imprimable et pour la pose du support imprimé sous forme de pile pliée, caractérisé en ce que
des unités d'information sont stockées dans au moins l'une des mémoires (12) durant le laps de temps de leur actualité,
en ce que les unités d'information actuelles mémorisées sont proposées à plusieurs postes d'entrée disposés de manière décentralisée et équipés de moyens de commande,
en ce qu'une sélection d'unités d'information générée à un poste d'entrée spécifique à l'aide des moyens de commande est transmise à au moins l'un des ordinateurs système (11) comme ordre de distribution d'un produit imprimé contenant la sélection des unités d'information,
en ce que, dans au moins l'un des ordinateurs système (11) initialisé par l'ordre transmis par le poste d'entrée spécifique, des données pour la sélection - correspondant à l'ordre - d'unités d'information sont copiées à partir d'au moins l'une des mémoires (12) et traitées pour former une quantité de données qui comporte la sélection conforme à l'ordre, des unités d'information en tant que séquence de pages imprimables, des données de commande pour le transport de données vers un dispositif d'impression affecté au poste d'entrée spécifique et des données de commande pour un processus d'impression correspondant,
en ce que la quantité de données conforme à l'ordre et générée dans au moins l'un des ordinateurs système (11) est transmise à un dispositif d'impression (14) affecté au poste d'entrée spécifique,
en ce que le dispositif d'impression (14) est commandé par la quantité de données de telle sorte qu'il imprime la sélection conforme à l'ordre, d'unités d'information en tant que produit imprimé en forme d'accordéon et la pose sous forme de pile pliée ;
et en ce que la zone avec les pages imprimées du produit imprimé généré selon l'ordre est séparée de la bande quasi- continue.

2. Procédé selon la revendication 1, caractérisé en ce que le produit imprimé en forme d'accordéon présente des pages d'impression 1 à n qui sont séparées l'une de l'autre par des arêtes pliées et sont disposées sur un côté de la bande du support imprimable dans l'ordre 1, n, n-1... n/2+2 et sur l'autre côté de la bande, dans l'ordre 2, 3, 4, ... n/2+1.

3. Procédé selon la revendication 1 ou 2, caractérisé en ce que les ordres et les quantités de données générées selon l'ordre sont transmis entre les postes d'entrée, les imprimantes et au moins l'un des ordinateurs système (11) par l'intermédiaire du réseau téléphonique.

4. Procédé selon l'une quelconque des revendications 1 à 3, caractérisé en ce que la bande quasi-continue du support imprimable est non pliée et enroulée ou pliée au préalable sous forme de pile pliée.

5. Procédé selon l'une quelconque des revendications 1 à 4, caractérisé en ce que l'ordre est généré dans une connexion interactive entre un poste d'entrée et au moins l'un des ordinateurs système (11) et transmis à l'ordinateur système (11).

6. Procédé selon la revendication 5, caractérisé en ce qu'une gestion de l'ordre est initiée en même temps que la passation de l'ordre.

7. Procédé selon la revendication 6, caractérisé en ce que la passation de l'ordre et la gestion de l'ordre sont commandées par l'intermédiaire d'une carte devant être introduite au poste d'entrée.

8. Procédé selon l'une quelconque des revendications 1 à 7, caractérisé en ce que les unités d'informations sont conformes du point de vue de leur contenu, à des articles individuels, des parties de journaux ou de revues ou à l'intégralité de journaux ou revues.

9. Procédé selon l'une quelconque des revendications 1 à 7, caractérisé en ce que les unités d'informations sont conformes du point de vue de leur contenu à des parties de catalogues de vente par correspondance, des brochures, des listes de prix ou à des annuaires téléphoniques.

10. Système d'exécution du procédé selon la revendication 1, c'est à dire de fabrication et de distribution décentralisée de produits imprimés qui comportent des informations à actualiser régulièrement, à l'occasion de quoi, pour l'enregistrement électronique, l'actualisation et la mémorisation électronique de ces informations, il est prévu au moins une station de travail (10), au moins un ordinateur système (11) et au moins une mémoire (12) et pour l'impression de l'information sur un support imprimable, il est prévu plusieurs dispositifs d'impression (14) numériques qui sont équipés pour l'impression des deux côtés d'une bande quasi-continue du support imprimable et pour la pose du support imprimé sous forme de pile pliée, caractérisé en ce que
pour la mémorisation des unités d'information durant le laps de temps de leur actualité, au moins l'un des ordinateurs système (11) est connecté à au moins l'une des mémoires (12),
en ce que pour proposer les unités d'information actuelles mémorisées et pour générer une sélection d'unités d'information proposées, il est prévu plusieurs postes d'entrée disposés de façon décentralisée et équipés de moyens de commande,
en ce que pour la transmission de la sélection générée d'unités d'information proposées en tant qu'ordre de distribution d'un produit imprimé comportant la sélection d'unités d'information, les postes d'entrée sont reliés à au moins l'un des ordinateurs système (11),
en ce qu'au moins l'un des ordinateurs système (11) initialisé par l'ordre transmis par le poste d'entrée spécifique copie des données pour la sélection conforme à l'ordre, d'unités d'information à partir d'au moins l'une des mémoires (12) et les traite pour former une quantité de données qui comporte la sélection conforme à l'ordre, des unités d'information en tant que séquence de pages imprimables, des données de commande pour le transport de données vers un dispositif d'impression affecté au poste d'entrée spécifique et des données de commande pour un processus d'impression correspondant,
en ce que pour la transmission de la quantité de données générée selon l'ordre dans au moins l'un des ordinateurs système (11), au moins l'un des ordinateurs système (11) est connecté à un dispositif d'impression (14) affecté au poste d'entrée,
en ce que le dispositif d'impression (14) peut être commandé par la quantité de données transmise pour l'impression et la pose sous forme de pile pliée d'un produit imprimé en forme d'accordéon qui comporte la sélection conforme à l'ordre, des unités d'information et
en ce que les connexions entre l'ordinateur système (11), la mémoire (12), les postes d'entrée (13) et les dispositifs d'impression (14) sont directes ou indirectes et sont réalisées par des lignes de données ou des systèmes de connexion sans fil.

11. Système selon la revendication 10, caractérisé en ce qu'au moins les lignes de données ou les systèmes de communication sans fil entre l'ordinateur système (11) et les dispositifs d'impression (14) et les postes d'entrée (13) font partie d'un réseau téléphonique.

12. Système selon la revendication 10 ou 11, caractérisé en ce que les dispositifs d'impression (14) sont équipés pour le traitement d'une bande du support imprimable, ladite bande étant enroulée ou pliée au préalable pour former une pile pliée.

13. Système selon l'une des revendications 10 à 12, caractérisé en ce que les postes d'entrée (13) sont équipés pour le trafic interactif avec l'ordinateur système (11).

14. Système selon la revendication 13, caractérisé en ce que les postes d'entrée (13) sont équipés pour lire une carte.

15. Séquence de produits imprimés qui font partie du domaine des médias imprimés, de catalogues de vente, de catalogues de vente par correspondance, de brochures, de listes de prix et/ou d'annuaires, caractérisée en ce qu'elle est fabriquée et distribuée de façon décentralisée, les produits imprimés de la séquence étant en forme d'accordéon et en ce que le contenu et le volume de chaque produit imprimé correspondent à un ordre spécifique.
